# FASCICULE DE BREVET EUROPEEN

(11) **EP 3 140 085 B1**
(45) Date de publication et mention de la délivrance du brevet: **20.06.2018**
(21) Numéro de dépôt: 15723457.6
(22) Date de dépôt: 07.05.2015
(51) Int. Cl.: B25J 15/00

(54) **ACTIONNEMENT D'UNE MAIN DESTINÉE À ÉQUIPER UN ROBOT À CARACTÈRE HUMANOÏDE**
BETÄTIGUNG EINER HAND ZUR BEREITSTELLUNG AN EINEM HUMANOIDEN ROBOTER
ACTUATION OF A HAND TO BE PROVIDED ON A HUMANOID ROBOT

(30) Priorité: 07.05.2014 FR 1454162
(43) Date de publication de la demande: 15.03.2017
(73) Titulaire: Softbank Robotics Europe, 75015 Paris (FR)
(72) Inventeur: LAVILLE, Jérémy, F-75015 Paris (FR); FAUCHET, Gilles, F-75015 Paris (FR); DEPOST, Thibault, F-75015 Paris (FR)
(74) Mandataire: Collet, Alain
(86) Numéro de dépôt international: PCT/EP2015/060022
(87) Numéro de publication internationale: WO 2015/169886

(56) Documents cités:
- CN-U- 201 734 803
- JP-A- 2005 059 110
- JP-A- 2008 018 489
- JP-A- 2010 247 294
- US-A1- 2010 011 899
- US-A1- 2013 285 404

## Description

L'invention concerne une main destinée à équiper un robot à caractère humanoïde. Plus précisément, elle porte sur une main dont les doigts peuvent être déplacés d'une position de repos vers deux positions distinctes au moyen d'un unique actionneur.

La main humaine est une partie du corps humain extrêmement complexe. Elle comprend plusieurs doigts articulés autour de la paume de la main. Par ailleurs chaque doigt possède plusieurs phalanges articulées entre elles. Chaque articulation est mobile au moyen de muscles. Les différentes articulations de la main permettent la préhension d'objets de forme diverses. La position relative des doigts et de la paume permet également de réaliser des signes ou symboles permettant de communiquer un message, par exemple l'index tendu pour désigner un objet ou une direction, le pouce tendu pour signifier une approbation, etc... La maitrise des mouvements des doigts de la main revêt donc un intérêt particulier pour renforcer le caractère humanoïde d'un robot et ses capacités d'interaction. Une difficulté réside dans le grand nombre d'actionneurs nécessaires pour assurer le contrôle indépendant des mouvements des doigts.

Il est peu réaliste de piloter indépendamment le mouvement de chacune des phalanges de chacun des doigts de la main, tant pour la préhension d'objet que pour la communication d'un message visuel. On cherche en pratique à donner le plus grand nombre de possibilité de mouvements avec le plus petit nombre d'actionneurs. De manière connue, un mécanisme est dit sous-actionné lorsque le nombre d'actionneurs pilotables A est inférieur au nombre de degrés de liberté N, i.e. lorsque N > A. Le degré de sous-actionnement est alors défini comme la différence (N - A). On connait par exemple une main sous actionnée dans laquelle quatre doigts à trois phalanges et un doigt à deux phalanges peuvent être refermés par un actionneur unique. En permettant le pilotage de quatorze degrés de liberté - via quatorze liaisons pivot - au moyen d'un unique actionneur, une telle main présente un fort degré de sous-actionnement.

On a tenté d'améliorer la capacité de contrôle d'une main en conservant un fort degré de sous-actionnement de la main. On connait par exemple la mise en oeuvre d'un palonnier, disposé entre l'actionneur et les doigts de manière à répartir l'effort de préhension sur chacun des doigts. La main peut ainsi, au moyen d'un unique actionneur, saisir des objets de forme diverses. La main n'est toutefois pilotable qu'entre une position ouverte et une position fermée ; la position respective de chacun des doigts en position fermée dépendant de la forme de l'objet saisi. Si aucun objet n'est interposé entre les doigts, ceux-ci se referment vers une position représentant un point fermé.

Pour renforcer le caractère humanoïde et ses capacités d'interaction d'un robot, il reste désirable d'augmenter les possibilités de contrôle des mouvements d'une main tout en conservant un fort degré de sous-actionnement. Bien entendu, la solution devra pouvoir s'insérer dans l'environnement structurel et fonctionnel du robot.

A cet effet, l'invention a pour objet une main destinée à équiper un robot à caractère humanoïde, la main comprenant une paume et plusieurs doigts, chacun des doigts pouvant être déplacés par rapport à la paume entre une position de repos maintenue par effet ressort et une position comprimée obtenue par entrainement d'une pièce de liaison entre ledit doigt et la paume, en contrant l'effet ressort. La main comprend en outre un arbre motorisé, relié à la pièce de liaison de chacun des doigts, et configuré de sorte à déplacer de la position de repos, où les doigts représentent avec la paume une main ouverte, vers la position comprimée au moins un premier doigt par rotation de l'arbre motorisé dans un premier sens de rotation, et tous les doigts par rotation de l'arbre motorisé dans un sens de rotation opposé au premier sens de rotation, de manière à représenter avec la paume une main fermée. L'arbre comprend en outre un premier et un second profils radiaux, respectivement sur une première et une seconde portions de sa circonférence, configurés pour entrainer la pièce de liaison d'un doigt, lors d'une rotation de l'arbre respectivement dans le premier sens et le sens opposé de rotation.

Selon l'invention, deux des doigts sont implantés dans la paume de manière à s'apparenter respectivement à un pouce et à un index, le pouce ou l'index étant maintenu dans la position de repos lors d'une rotation de l'arbre dans un premier sens.

Avantageusement, un des doigts de la main est déplacé par rotation de l'arbre uniquement dans un des deux sens de rotation.

Avantageusement, la pièce de liaison d'un des doigts comprend un câble relié d'une part au doigt et d'autre part à l'arbre au moyen d'un sertissage logé dans une cavité de l'arbre ; le câble traversant radialement l'arbre par un conduit reliant la cavité et une extrémité d'un des profil radiaux, de sorte que la rotation de l'arbre dans un sens de rotation vient enrouler le câble sur ledit profil radial, entrainant le déplacement du doigt par traction du câble.

Avantageusement, le profil radial d'un des doigts est sensiblement circulaire sur une portion de circonférence proche d'un demi-cercle centré sur l'axe de rotation de l'arbre, et sur lequel le câble dudit doigt peut venir s'enrouler ; le diamètre du profil radial déterminant la course du câble et l'amplitude du déplacement du doigt entre la position de repos et la position comprimée.

Avantageusement, la pièce de liaison d'un des doigts comprend un sertissage monté libre en rotation dans la cavité centrée sur l'axe de rotation de l'arbre ; le conduit étant configuré pour permettre au câble de traverser l'arbre radialement tout au long d'un profil radial, de sorte que le doigt est maintenu dans la position de repos lors d'une rotation de l'arbre.

Avantageusement, l'arbre présente plusieurs premier et second profils radiaux disposés successivement selon l'axe de rotation de l'arbre, pour le déplacement simultané de plusieurs doigts.

Avantageusement, la main comprend deux doigts identiques reliés à l'arbre par deux câbles de longueurs identiques et deux sertissages identiques. L'arbre comprend deux cavités de logement aménagées dans l'arbre à deux distances distinctes de l'axe de rotation de l'arbre, permettant d'implanter les deux doigts dans la paume de la main à deux distances distinctes de l'axe de rotation de l'arbre.

Avantageusement, la pièce de liaison d'un des doigts est rigide et dont l'arbre comprend une première et une seconde cames ; la pièce de liaison rigide étant déplacée respectivement au moyen de la première et seconde cames par rotation de l'arbre respectivement dans le premier sens et dans le sens opposé.

L'invention porte également sur un robot à caractère humanoïde équipée d'une main ayant les caractéristiques précédemment décrites.

L'invention sera mieux comprise et d'autres avantages apparaîtront à la lecture de la description détaillée d'un mode de réalisation donné à titre d'exemple sur les figures suivantes.
Les figures 1a et 1b représentent deux exemples de robots humanoïdes pouvant être équipés de deux mains selon l'invention,
les figures 2a, 2b et 2c représentent un exemple de main de robot humanoïde comprenant une paume et des doigts positionnés de manière à représenter la main en configuration « main ouverte », « main fermée » et « index tendu ».
les figures 3a et 3b représentent un exemple de doigt de robot humanoïde constitué de plusieurs phalanges, respectivement en position « doigt tendu » et « doigt replié »
les figures 4a et 4b illustrent le principe selon l'invention du déplacement des doigts de la main de la configuration « main ouverte » respectivement vers la configuration « main fermée » et la configuration « index tendu »,
la figure 5 représente un arbre motorisé et des pièces de liaison mis en oeuvre dans la main de robot humanoïde selon l'invention,
les figures 6a et 6b représentent selon deux vues l'arbre motorisé et les pièces de liaison entre l'arbre et trois doigts de la main du robot.

Par souci de clarté, les mêmes éléments porteront les mêmes repères dans les différentes figures.

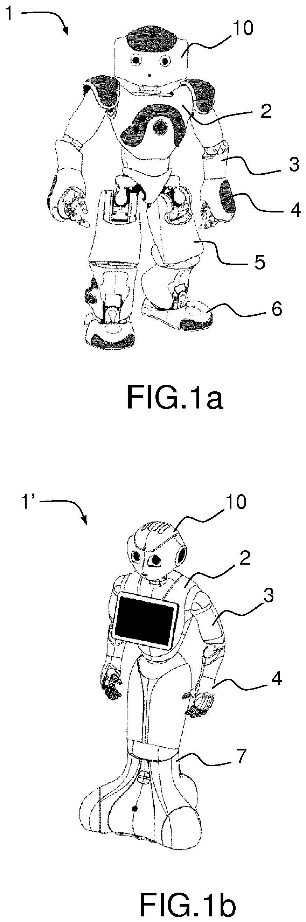

Les **figures 1a et 1b** représentent deux exemples de robots humanoïdes développés par la société ALDEBARAN ROBOTICS™. Le robot humanoïde 1 représenté en figure 1a comprend une tête 10, un tronc 2, deux bras 3, deux mains 4, deux jambes 5 et deux pieds 6. Le robot humanoïde 1' représenté en figure 1b comprend une tête 10, un tronc 2, deux bras 3, deux mains 4 et une jupe 7. L'invention porte sur une main pouvant équiper ces types de robots humanoïdes.

L'invention est décrite dans la suite dans le cas particulier d'une main comprenant quatre doigts implantés dans une paume. Trois doigts constitués de trois phalanges s'apparentent à un index, un majeur et un annulaire. Un quatrième doigt constitué de deux phalanges s'apparente à un pouce. Il est bien entendu que l'invention ne se limite pas à cet exemple particulier, mais couvre plus largement une main selon la revendication 1 comprenant une paume et plusieurs doigts motorisés permettant, à la manière d'un humain, de déplacer les doigts par rapport à la paume. En outre, l'invention est mise en oeuvre dans une main pour renforcer le caractère humanoïde du robot, par exemple en permettant une communication visuelle améliorée. Il est entendu que l'invention peut être mise en oeuvre selon le même principe et avec les mêmes bénéfices pour d'autres organes, par exemple un pied de robot humanoïde ou une patte de robot à caractère animal. Dans la suite, le terme de main désigne de manière générale un organe comprenant une paume et des doigts motorisés par rapport à la paume.

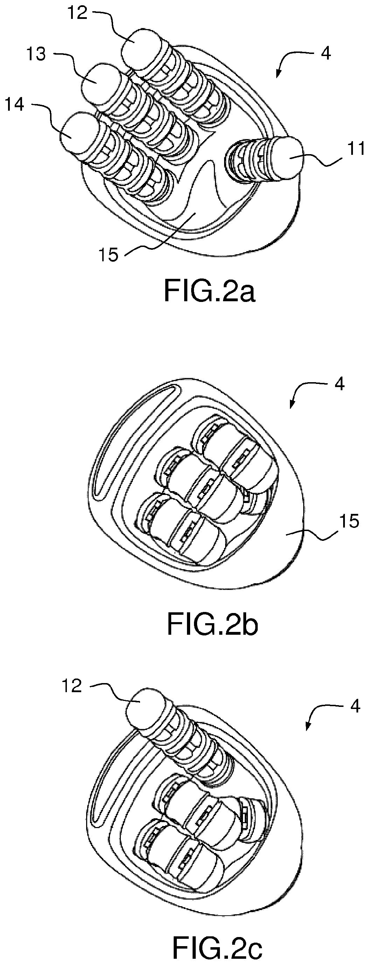

Les **figures 2a, 2b et 2c** représentent un exemple de main de robot humanoïde selon l'invention comprenant une paume et des doigts positionnés de manière à représenter la main en configuration « main ouverte », « main fermée » et « index tendu ». Dans l'exemple représenté sur les figures, la main comprend une paume 15, trois doigts 12, 13 et 14 constitués de trois phalanges et un doigt 11 constitué de deux phalanges. Par leur forme et leur implantation dans la paume de la main, les doigts 11, 12, 13 et 14 constituent respectivement le pouce, l'index, le majeur et l'annulaire de la main 4. La figure 2a représente la main en configuration « main ouverte », la figure 2b en configuration « main fermée » et la figure 2c en configuration « index tendu ».

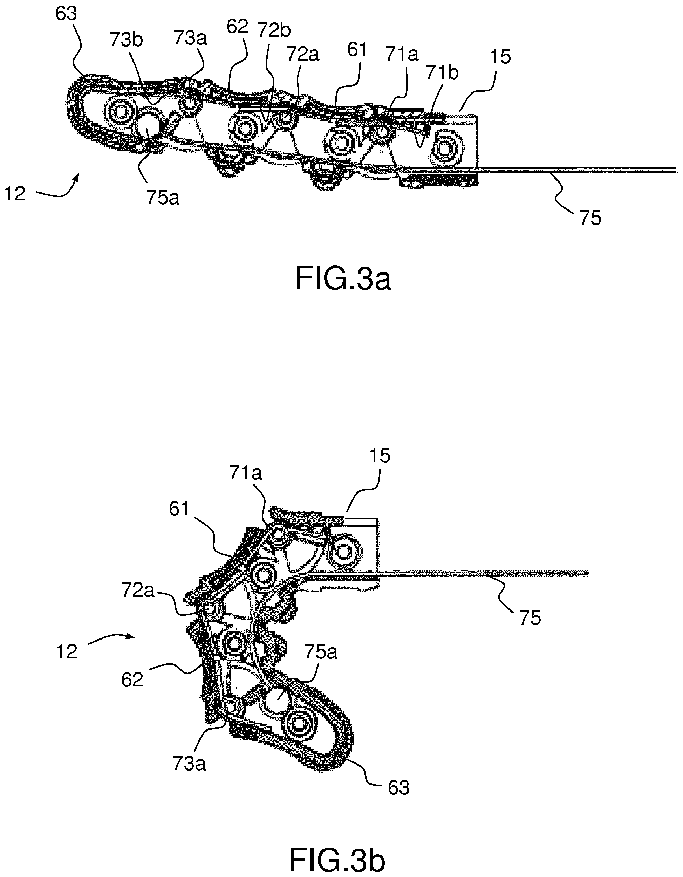

Les **figures 3a et 3b** représentent un exemple de doigt de robot humanoïde constitué de plusieurs phalanges, respectivement en position « doigt tendu » et « doigt replié ». On connait divers types de main sous actionnées cherchant à piloter au moyen d'un nombre limité d'actionneur le plus grand nombre de degré de liberté des doigts de la main. Dans une conception répandue illustrée sur les figures, chaque doigt comprend plusieurs phalanges reliées successivement les unes aux autres. Par exemple, le doigt 12 comprend successivement une phalange proximale 61, reliée à la paume 15, une phalange médiane 62, et une phalange distale 63, la plus distante de la paume. Les phalanges sont reliées entre elles et avec la paume par une liaison à un ou plusieurs degrés de liberté, par exemple une liaison pivot. Par exemple, la paume 15 et la phalange 61 sont reliés par une liaison pivot 71a ; les phalanges 61 et 62 sont reliées par une liaison pivot 72a ; et les phalanges 62 et 63 sont reliées par une liaison pivot 73a. Dans une position par défaut, dénommée dans la suite position de repos, les phalanges des doigts sont maintenues en position par effet ressort. Ce maintien peut être obtenu au niveau de chaque liaison pivot au moyen d'une butée mécanique limitant le débattement angulaire de la liaison pivot et d'un mécanisme à ressort venant positionner les phalanges en butée mécanique. Ainsi, les phalanges 61, 62 et 63 sont maintenues dans une position de repos représentant un doigt tendu, au moyen des ressorts hélicoïdaux 71b 72b et 73b enroulés autour des liaisons pivots 71a, 72a et 73a.

Chaque doigt comprend en outre une pièce de liaison entre le doigt et la paume configurée pour entrainer le déplacement du doigt par rapport à la paume, de la position de repos vers une autre position en exerçant une force contrant l'effet ressort. Par exemple, la pièce de liaison peut comprendre un câble 75 traversant les phalanges du doigt et relié d'une part à la phalange distale 63, par exemple au moyen d'un sertissage 75a, et d'autre part à un actionneur électrique (non représenté) dans la paume. En exerçant une force de traction supérieure à la force de rappel des ressorts l'actionneur entraine la rotation de chacune des phalanges, et déplace le doigt de sa position de repos vers une position extrême, dite position comprimée, représentée en figure 3b.

Dans une main sous-actionnée limitant au maximum le nombre d'actionneur, les câbles de chacun des doigts sont reliés à un unique actionneur, capable de déplacer simultanément tous les doigts de la position de repos vers la position comprimée. Pour permettre la préhension d'objets de formes variés, on a aussi envisagé comme mentionné précédemment d'interposer un palonnier entre l'actionneur et les câbles de chacun des doigts, de sorte à répartir l'effort de traction transmis aux différents câbles.

Nous allons décrire dans la suite une main sous actionnée selon l'invention dans ce cas particulier d'une main comprenant plusieurs doigts, chaque doigt comprenant plusieurs phalanges maintenues dans une position par un mécanisme à ressort et un câble de liaison dont la traction par un actionneur permet d'entrainer en rotation chaque phalange en contrant l'effet ressort. Cette mise en oeuvre n'est pas limitative de la présente invention. D'autres mises en oeuvre sont également envisagées. Les doigts peuvent par exemple comprendre une unique phalange déplaçable entre deux positions extrêmes. Lorsqu'un doigt comprend plusieurs phalanges, l'effet ressort maintenant le doigt en position de repos peut être obtenu au moyen d'un ensemble de ressorts hélicoïdaux associés à chacune des liaisons pivots des différentes phalanges, comme illustré par les figures 3a et 3b, ou au moyen d'un mécanisme à ressort formé d'une pièce unique reliant chacune des phalanges et exerçant une force de rappel maintenant l'ensemble des phalanges dans la position de repos. De même, la pièce de liaison entre le doigt et la paume peut comprendre un câble souple 75, tel qu'un câble métallique, reliant l'actionneur motorisé assurant la traction du câble à la phalange distale. Il est aussi envisagé une pièce de liaison constituée d'une pièce mécanique rigide en contact par une extrémité avec un actionneur motorisé comprenant un arbre muni de cames dont la rotation entraine en mouvement la pièce rigide pour déplacer le doigt.

Dans la suite, la position de repos de chacun des doigts correspond à un doigt tendu pour une main humaine. Tous les doigts sont en position de repos dans la configuration « main ouverte » représentée en figure 2a. La position comprimée de chacun des doigts correspond à un doigt replié contre la paume. Tous les doigts sont en position comprimée dans la configuration « main fermée » représentée sur la figure 2b. Cette position de chacun des doigts par rapport à la paume pour la position de repos et la position comprimée est choisie par convention ; ce choix présentant certains avantages en terme de consommation du moteur, de durée de vie, ou de résistance à une chute. Il est toutefois possible, sans sortir du cadre de l'invention, de choisir pour position de repos d'un ou de tous les doigts la position où le ou les doigts sont repliés contre la paume. L'actionneur motorisé permettant alors d'ouvrir le ou les doigts de la main.

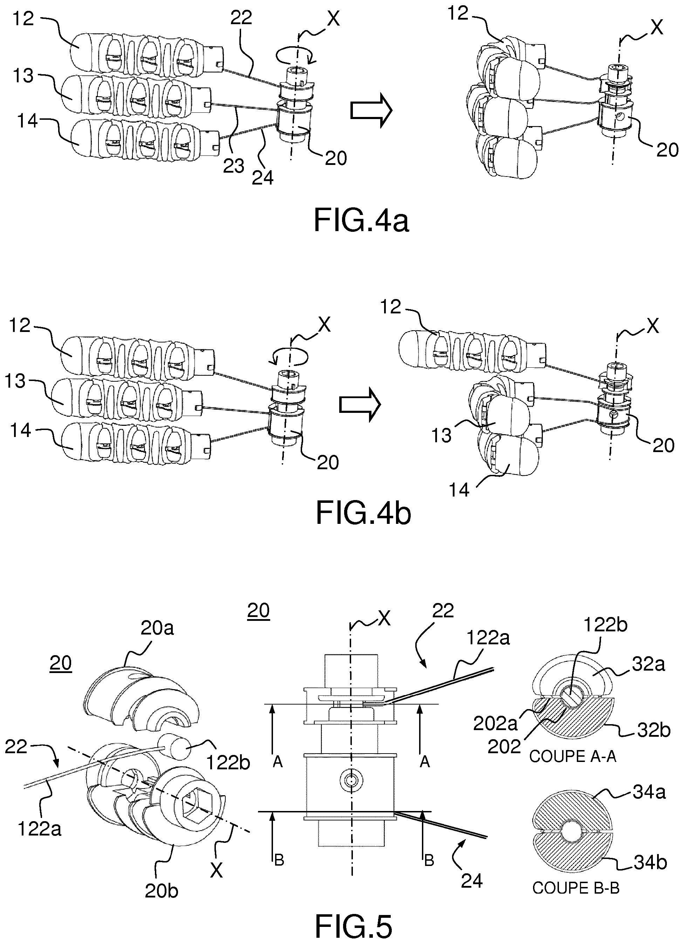

L'idée générale de la présente invention est d'ajouter une possibilité de mouvement à une main tout en conservant le même degré de sous actionnement. L'invention consiste à entrainer un ou plusieurs doigts hors de leur position de repos, par rotation d'un arbre motorisé dans un premier sens, et tous les doigts par rotation dans le sens de rotation opposé. L'invention exploite avantageusement les deux capacités motrices d'un actionneur rotatif pour permettre deux mouvements distincts des doigts de la main à partir d'une même configuration initiale. Dans le mode de réalisation représenté sur les figures, une rotation de l'actionneur rotatif dans un premier sens permet de basculer de la configuration « main ouverte » à la configuration « main fermée », une rotation dans le sens opposé permet de basculer de la configuration « main ouverte » à la configuration « index tendu ». Comme précédemment, la position de chacun des doigts pour les trois configurations est arbitraire. D'une manière générale, l'invention porte sur un arbre motorisé configuré pour déplacer de la position de repos vers la position comprimé au moins un premier doigt par rotation de l'arbre motorisé dans un premier sens de rotation et tous les doigts par rotation de l'arbre motorisé dans un sens de rotation opposé au premier sens de rotation. Les **figures 4a et 4b** illustrent le principe selon l'invention du déplacement des doigts de la main de la configuration « main ouverte » respectivement vers la configuration « main fermée » et la configuration « index tendu ». Sur les deux figures sont représentés trois doigts de la main, l'index 12, le majeur 13 et l'annulaire 14. La paume et le pouce ne sont pas représentés. En partie gauche des deux figures, les trois doigts sont dans leur position de repos, maintenue par effet ressort. En partie droite de la figure 4a, les trois doigts sont dans leur position comprimée (configuration « main fermée »). En partie droite de la figure 4b, le majeur 13 et l'annulaire 14 sont dans leur position comprimée, l'index 12 est maintenu en position de repos (configuration « index tendu »).

La main comprend un arbre motorisé 20 relié à chacun des doigts 12, 13 et 14 par une pièce de liaison 22, 23 et 24, ici constitué d'un câble souple relié d'une part au doigt et d'autre part à l'arbre motorisé 20. L'arbre motorisé 20 peut être implanté dans la paume 15 de la main, ou encore dans l'avant bras du robot, ou même dans le torse du robot en adaptant la longueur des pièces de liaison. Dans la configuration initiale représentée en partie gauche, les câbles de liaison sont tendus par la force de rappel exercée par les ressorts des doigts. Partant de cette configuration initiale, l'arbre motorisé 20 peut être entrainé dans deux sens de rotation autour d'un axe principal référencé X. La rotation de l'arbre entraine le câble qui vient s'enrouler autour de l'arbre en exerçant une force de traction contrant l'effet ressort. Le doigt se replie, en se déplaçant de sa position de repos vers sa position comprimée. De manière avantageuse, l'arbre peut présenter un premier profil radial sur lequel le câble vient s'enrouler lors d'une rotation selon un premier sens de rotation, et un second profil radial sur lequel le câble vient s'enrouler lors d'une rotation selon un sens de rotation opposé. De même, l'arbre peut présenter plusieurs premiers et seconds profils aménagés successivement le long de l'axe principal X ; à chaque doigt étant associé un premier et un second profils radiaux, sur lesquels le câble de chacun des doigts peut venir s'enrouler. La définition des premier et second profils radiaux permet de définir avec une grande flexibilité de conception, les deux mouvements de la main pilotables par un même actionneur rotatif.

La **figure 5** représente l'arbre motorisé et les pièces de liaison mis en oeuvre dans l'exemple de main. En partie gauche de la figure sont représentés en vue éclaté l'arbre motorisé 20, formé d'une partie supérieure 20a et d'une partie inférieure 20b, et la pièce de liaison 22 du doigt 12 comprenant un câble souple 122a et un sertissage 122b. La pièce de liaison 22 est reliée d'une part au doigt 12 et d'autre part à l'arbre 20, au moyen du sertissage 122b logé dans une cavité 202 de l'arbre 20.

En partie centrale de la figure sont représentés en vue de coté l'arbre 20 et les pièces de liaison 22 et 24 des doigts 12 et 14. En partie droite de la figure sont représentés ces mêmes composants au moyen de deux vues en coupes, A-A et B-B. Comme représenté sur ces figures, le câble 122a traverse l'arbre radialement par un conduit 202a reliant la cavité 202 et une extrémité du premier profil radial 32a et une extrémité du second profil radial 32b. Ainsi, selon le sens de rotation de l'arbre, le câble 22 de l'index 12 peut venir s'enrouler sur l'un des deux profils radiaux 32a ou 32b représentés sur la vue en coupe A-A. De même, les câbles 23 et 24 du majeur 13 et de l'auriculaire 14 viennent s'enrouler sur l'un des deux profils radiaux 34a ou 34b représentés sur la vue en coupe A-A.

Notons que pour chaque doigt, le premier et le second profil radiaux s'étendent sur une première et une seconde portion de la circonférence. Les premier et second profils radiaux ont une extrémité en commun, correspondant à une extrémité du conduit de passage traversé par le câble. Le premier et le second profil radiaux peuvent être sensiblement circulaires et sur une portion de circonférence proche d'un demi-cercle, comme c'est le cas pour les profils radiaux 34a et 34b associés aux doigts 13 et 14. Les diamètres des premier et second profils radiaux déterminent alors la course du câble et l'amplitude du déplacement du doigt. Ce choix n'est pas limitatif de l'invention. Des profils radiaux non circulaires peuvent être envisagés, permettant d'adapter la vitesse de déplacement du doigt lors d'une rotation de l'arbre. De même, l'arbre peut être piloté de manière à parcourir toute la longueur du profil radial ou simplement une partie de celle-ci.

Il est également possible de configurer l'arbre motorisé de manière à maintenir un doigt en position de repos lors d'une rotation de l'arbre motorisé. C'est en particulier le cas illustré par la figure 4b pour l'index 12 qui reste en position de repos malgré la rotation de l'arbre selon le premier sens de rotation. Pour cela, le sertissage 122b de la pièce de liaison 22 est de forme présentant un axe possible de rotation, par exemple sensiblement cylindrique ou sphérique, et monté libre en rotation dans la cavité 202 autour d'un axe confondu avec l'axe de rotation principal de l'arbre. De plus, le conduit traverse l'arbre radialement sur toute la portion de circonférence du premier profil radial. Ainsi configuré, le câble 122a peut traverser l'arbre radialement sur toute la portion de circonférence du premier profil radial. La rotation de l'arbre selon le premier sens de rotation entraine une rotation du sertissage 122b par rapport à sa cavité de logement 202, le câble 122a restant tendu par effet ressort. Le doigt reste maintenu en position de repos lors de la rotation de l'arbre dans le premier sens de rotation. Au contraire, la rotation de l'arbre dans le sens opposé vient enrouler le câble contre le second profil radial 32b, entrainant le déplacement de l'index.

Avantageusement, la définition du premier et du second profils radiaux offrent une grande flexibilité de conception pour les deux mouvements des doigts la main. Certains doigts peuvent avantageusement être reliés à l'arbre par un profil radial commun, de sorte que les doigts sont déplacés selon un même profil de vitesse et une même amplitude. Dans l'exemple représenté, c'est le cas pour le majeur 13 et l'annulaire 14.

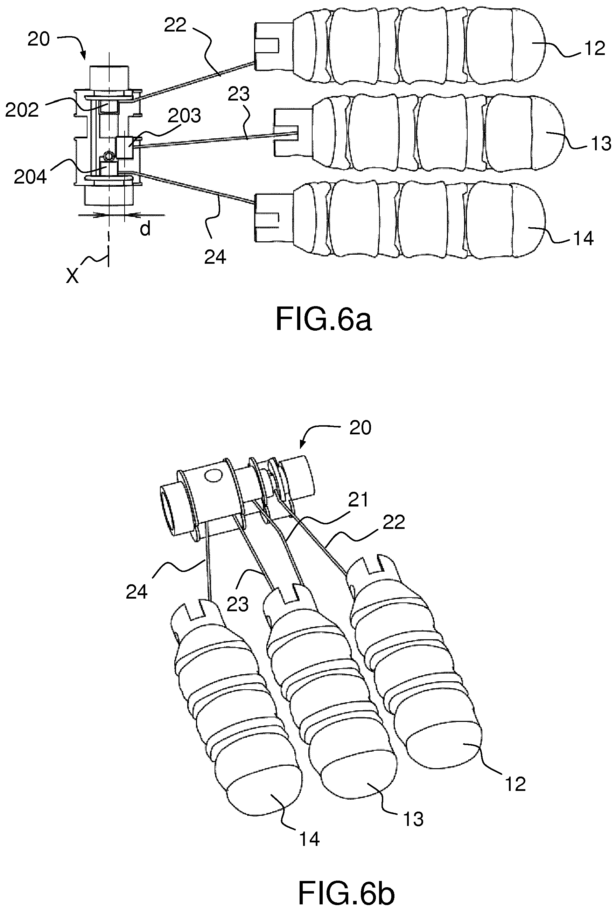

Les **figures 6a et 6b** représentent selon deux vues l'arbre motorisé et les pièces de liaison entre l'arbre et trois doigts de la main du robot.

Pour simplifier la fabrication du robot et réduire ses coûts de production, il est envisagé par la présente invention une main mettant en oeuvre plusieurs doigts strictement identiques. Dans l'exemple représenté, l'index 12, le majeur 13 et l'annulaire 14 sont trois doigts à trois phalanges identiques et constitués des mêmes composants. Les trois doigts ne se distinguent que par leur implantation dans la paume de la main. Pour renforcer le caractère humanoïde de la main, les trois doigts sont reliés à la paume de la main en trois points formant sensiblement un arc de cercle ; l'index 12 et l'annulaire 14 étant implantés en retrait par rapport au majeur 13. Avantageusement, l'arbre est implanté dans la paume de la main de manière à ce que l'index 12 et l'annulaire 14 soit sensiblement à une même distance de l'axe de rotation de l'arbre. Ainsi, deux pièces de liaison 22 et 24 strictement identiques peuvent être mise en oeuvre pour ces deux doigts. Comme représenté sur la figure 5a, le sertissage des pièces de liaison 22 et 24 sont logés dans deux cavités 202 et 204 aménagés dans l'arbre sur l'axe principal de l'arbre. Une pièce de liaison 23 identique peut aussi être mise en oeuvre pour le majeur 13. Pour cela, le sertissage de la pièce de liaison 23 est logé dans une cavité 203 aménagé dans l'arbre à une distance référencée « d » de l'axe principal de l'arbre. Ainsi la distance « d » correspond au décalage d'implantation des doigts dans la paume, formant ainsi l'arc de cercle mentionné précédemment. Bien que les cavités de logement des moyens de liaison 23 et 24 soient aménagées dans l'arbre à deux distances distinctes de l'axe de rotation de l'arbre, la course des câbles au cours d'une rotation est identique dans la mesure où les profils radiaux sont identiques. Les déplacements du majeur et de l'annulaire sont donc identiques.

Avantageusement, les moyens de liaison peuvent être strictement identiques, notamment la longueur du câble de liaison ; leur implantation distincte sur l'arbre motorisé permettant une implantation à distance distincte de l'arbre motorisé.

Notons enfin qu'il est également envisagé de relier tous les doigts de la main à l'arbre motorisé, et en particulier le pouce au moyen d'une pièce de liaison 21 représentée en figure 5b.

Comme mentionné précédemment, la mise en oeuvre d'une pièce de liaison comprenant un câble souple entrainant le déplacement du doigt par enroulement autour d'une poulie motorisée n'est qu'un exemple particulier. D'autres formes de pièce de liaison sont également envisagées, par exemple une liaison rigide entrainée au moyen d'une première et d'une seconde cames de l'arbre, par rotation de l'arbre dans un premier sens et dans le sens opposé. Ces différents modes de réalisation exploitent avantageusement les deux capacités motrices d'un actionneur rotatif pour conférer deux mouvements possibles aux doigts d'une main sous-actionnée. Pour cela, ces différents modes de réalisation ont en commun les caractéristiques particulières exposées dans la revendication principale ci-dessous.

## Revendications

1. Main destinée à équiper un robot à caractère humanoïde, la main (4) comprenant une paume (15) et plusieurs doigts (11, 12, 13, 14), chacun des doigts (11, 12, 13, 14) pouvant être déplacé par rapport à la paume (15) entre une position de repos maintenue par effet ressort et une position comprimée obtenue par entrainement d'une pièce de liaison (22, 23, 24) entre ledit doigt (11, 12, 13, 14) et la paume (15), en contrant l'effet ressort, la main comprenant en outre un arbre motorisé (20), relié à la pièce de liaison (22, 23, 24) de chacun des doigts (11, 12, 13, 14), et configuré de sorte à déplacer de la position de repos, où les doigts (11, 12, 13, 14) représentent avec la paume (15) une main ouverte, vers la position comprimée au moins un premier doigt (12) par rotation de l'arbre motorisé (20) dans un premier sens de rotation et tous les doigts (11, 12, 13, 14) par rotation de l'arbre motorisé (20) dans un sens de rotation opposé au premier sens de rotation, de manière à représenter avec la paume (15) une main fermée, l'arbre (20) comprenant en outre un premier et un second profils radiaux (34a, 34b), respectivement sur une première et une seconde portions de sa circonférence, configurés pour entrainer la pièce de liaison (24) d'un doigt (14), lors d'une rotation de l'arbre (20) respectivement dans le premier sens et le sens opposé de rotation, la main étant **caractérisée en ce que** deux des doigts (11, 12) sont implantés dans la paume (15) de manière à s'apparenter respectivement à un pouce (11) et à un index (12), l'index (12) ou le pouce (11) étant maintenus dans la position de repos lors d'une rotation de l'arbre dans un premier sens.

2. Main selon la revendication 1, dont un des doigts (12) est déplacé par rotation de l'arbre (20) uniquement dans un des deux sens de rotation.

3. Main selon l'une des revendications 1 ou 2, dont la pièce de liaison (22) d'un des doigts (12) comprend un câble (122a) relié d'une part au doigt (12) et d'autre part à l'arbre (20) au moyen d'un sertissage (122b) logé dans une cavité (202) de l'arbre (20); le câble (122a) traversant radialement l'arbre (20) par un conduit (202a) reliant la cavité (202) et une extrémité d'un des profil radiaux (32b), de sorte que la rotation de l'arbre (20) dans un sens de rotation vient enrouler le câble (122a) sur ledit profil radial (32b), entrainant le déplacement du doigt (12) par traction du câble (122b).

4. Main selon la revendication 3, dont ledit profil radial (32b) est sensiblement circulaire sur une portion de circonférence proche d'un demi-cercle centré sur l'axe (X) de rotation de l'arbre (20), et sur lequel le câble (122a) d'un doigt (12) peut venir s'enrouler ; le diamètre du profil radial déterminant la course du câble (122a) et l'amplitude du déplacement du doigt (12) entre la position de repos et la position comprimée.

5. Main selon l'une des revendications 3 ou 4, dont la pièce de liaison (22) d'un des doigts (12) comprend un sertissage (122b) monté libre en rotation dans la cavité (202) centrée sur l'axe (X) de rotation de l'arbre (20); le conduit (202a) étant configuré pour permettre au câble (122a) de traverser l'arbre (20) radialement tout au long d'un profil radial (32a), de sorte que le doigt (12) est maintenu dans la position de repos lors d'une rotation de l'arbre (20).

6. Main selon l'une des revendications 3 à 5, dont l'arbre (20) présente plusieurs premier et second profils radiaux (32a, 32b, 34a, 34b) disposés successivement selon l'axe (X) de rotation de l'arbre (20), pour le déplacement simultané de plusieurs doigts (12, 14).

7. Main selon l'une des revendications 3 à 6, comprenant deux doigts identiques (13, 14) reliés à l'arbre par deux câbles de longueurs identiques et deux sertissages identiques; l'arbre (20) comprenant deux cavités de logement (203, 204) aménagées dans l'arbre (20) à deux distances distinctes (d) de l'axe (X) de rotation de l'arbre (20), permettant d'implanter les deux doigts (13, 14) dans la paume (15) de la main (4) à deux distances distinctes de l'axe (X) de rotation de l'arbre (20).

8. Main selon l'une des revendications 1 ou 2, dont la pièce de liaison d'un des doigts est rigide et dont l'arbre comprend une première et une seconde cames ; la pièce de liaison rigide étant déplacée respectivement au moyen de la première et seconde cames par rotation de l'arbre respectivement dans le premier sens et dans le sens opposé.

9. Robot à caractère humanoïde équipée d'une main (4) selon l'une quelconque des revendications précédentes.

## Patentansprüche

1. Hand, mit der ein humanoider Roboter ausgestattet werden soll, wobei die Hand (4) eine Handfläche (15) und mehrere Finger (11, 12, 13, 14) umfasst, wobei jeder der Finger (11, 12, 13, 14) mit Bezug auf die Handfläche (15) bewegt werden kann zwischen einer Ruheposition, die durch Federwirkung gehalten wird, und einer komprimierten Position, die durch Antreiben eines Verbindungsstücks (22, 23, 24) zwischen dem Finger (11, 12, 13, 14) und der Handfläche (15) indem der Federkraft entgegen gewirkt wird erhalten wird, wobei die Hand ferner eine motorgetriebene Welle (20) umfasst, verbunden mit dem Verbindungsstück (22, 23, 24) von jedem der Finger (11, 12, 13, 14) und so konfiguriert, dass sie mindestens einen ersten Finger (12) durch Rotation der motorgetriebenen Welle (20) in einer ersten Drehrichtung von der Ruheposition, in der die Finger (11, 12, 13, 14) mit der Handfläche (15) eine offene Hand repräsentieren, in die komprimierte Position bewegt, und alle Finger (11, 12, 13, 14) durch Rotation der motorgetriebenen Welle (20) in einer Drehrichtung entgegengesetzt zur ersten Drehrichtung, um mit der Handfläche (15) eine geschlossene Hand zu repräsentieren, wobei die Welle (20) ferner ein erstes und ein zweites radiales Profil (34a, 34b) umfasst, jeweils auf einem ersten und einem zweiten Teil ihres Umfangs, konfiguriert zum Antreiben des Verbindungsstücks (24) von einem Finger (14) während einer Rotation der Welle (20) jeweils in der ersten und der entgegengesetzten Drehrichtung,
wobei die Hand **dadurch gekennzeichnet ist, dass**
zwei der Finger (11, 12) so in der Handfläche (15) implantiert sind, dass sie jeweils einem Daumen (11) und einem Zeigefinger (12) ähneln, wobei der Zeigefinger (12) oder der Daumen (11) bei einer Rotaton der Welle in einer ersten Richtung in der Ruheposition gehalten werden.

2. Hand nach Anspruch 1, von der einer der Finger (12) durch die Rotation der Welle (20) nur in einer der beiden Rotationsrichtungen bewegt wird.

3. Hand nach Anspruch 1 oder 2, von der das Verbindungsstück (22) von einem der Finger (12) ein Kabel (122a) umfasst, das einerseits mit dem Finger (12) und andererseits mit der Welle (20) mittels einer Crimpung (122b) verbunden ist, die in einem Hohlraum (202) der Welle (20) aufgenommen ist; wobei das Kabel (122a) die Welle (20) durch eine Leitung (202a) radial durchquert, die den Hohlraum (202) und ein Ende von einem der radialen Profile (32b) verbindet, so dass die Rotation der Welle (20) in einer Drehrichtung das Kabel (122a) auf dem radialen Profil (32b) aufrollt und die Bewegung des Fingers (12) durch Traktion des Kabels (122b) antreibt.

4. Hand nach Anspruch 3, von der das radiale Profil (32b) im Wesentlichen kreisförmig auf einem Umfangsabschnitt in der Nähe eines auf der Rotationsachse (X) der Welle (20) zentrierten Halbkreis ist und auf der das Kabel (122a) eines Fingers (12) sich aufrollen kann; wobei der Durchmesser des radialen Profils den Verlauf des Kabels (122a) und die Amplitude der Bewegung des Fingers (12) zwischen der Ruheposition und der komprimierten Position bestimmt.

5. Hand nach Anspruch 3 oder 4, wobei das Verbindungsstück (22) von einem der Finger (12) eine Crimpung (122b) umfasst, die frei drehbar in dem auf der Rotationsachse (X) der Welle (20) zentrierten Hohlraum (202) montiert ist; wobei die Leitung (202a) so konfiguriert ist, dass sie es zulässt, dass das Kabel (122a) die Welle (20) radial über die gesamte Länge eines radialen Profils (32a) durchquert, so dass der Finger (12) bei einer Rotation der Welle (20) in der Ruheposition gehalten wird.

6. Hand nach einem der Ansprüche 3 bis 5, deren Welle (20) mehrere erste und zweite radiale Profile (32a, 32b, 34a, 34b) präsentiert, die nacheinander entlang der Rotationsachse (X) der Welle (20) angeordnet sind, um mehrere Finger (12, 14) gleichzeitig zu bewegen.

7. Hand nach einem der Ansprüche 3 bis 6, die zwei identische Finger (13, 14) umfasst, die mit der Welle durch zwei Kabel von identischer Länge und zwei identische Crimpungen verbunden sind; wobei die Welle (20) zwei Aufnahmehohlräume (203, 204) umfasst, die in der Welle (20) in zwei getrennten Abständen (d) von der Rotationsachse (X) der Welle (20) vorgesehen sind, so dass die beiden Finger (13, 14) in der Handfläche (15) der Hand (4) in zwei getrennten Abständen von der Rotationsachse (X) der Welle (20) implantiert werden können.

8. Hand nach Anspruch 1 oder 2, wobei das Verbindungsstück von einem der Finger starr ist und wobei die Welle eine erste und eine zweite Nocke aufweist; wobei das starre Verbindungsstück jeweils mit Hilfe der ersten und der zweiten Nocke durch Rotation der Welle jeweils in der ersten Richtung und der entgegengesetzten Richtung bewegt wird.

9. Humanoider Roboter, ausgestattet mit einer Hand (4) nach einem der vorherigen Ansprüche.

## Claims

1. A hand intended for a humanoid robot, the hand (4) comprising a palm (15) and several fingers (11, 12, 13, 14), each of the fingers (11, 12, 13, 14), being able to be displaced in relation to the palm (15) between a position of rest maintained by spring effect and a compressed position obtained by driving a link part (22, 23, 24) between said finger (11, 12, 13, 14) and the palm (15), countering the spring effect,
the hand further comprising a motorized shaft (20), linked to the link part (22, 23, 24) of each of the fingers (11, 12, 13, 14), and configured so as to displace from the position of rest where the fingers (11, 12, 13, 14) represent with the palm (15) an open hand to the compressed position at least one first of the several fingers (12) by rotation of the motorized shaft (20) in a first direction of rotation and all of the fingers (11, 12, 13, 14) by rotation of the motorized shaft (20) in a direction of rotation opposite the first direction of rotation so as to represent with the palm (15) a closed hand, the shaft (20) further comprising a first and a second radial profile (34a, 34b), respectively on a first and second portion of its circumference, configured to drive the link part (24) of one of the several fingers (14) upon the rotation of the shaft (20) respectively in the first direction and the opposite direction of rotation,
the hand being **characterized in that** two of the fingers (11, 12) are located in the palm (15) so as to respectively be like a thumb (11) and an index finger (12), the index finger (12) or the thumb (11) being maintained in the position of rest upon the rotation of the shaft in a first direction.

2. The hand as claimed in claim 1, in which one of the fingers (12) is displaced by rotation of the shaft (20) only in one of the two directions of rotation.

3. The hand as claimed in claim 1 or 2, in which the link part (22) of one of the several fingers (12) comprises a cable (122a) linked on one side to the finger (12) and on the other side to the shaft (20) by means of a crimping (122b) housed in a cavity (202) of the shaft (20); the cable (122a) passing radially through the shaft (20) through a duct (202a) linking the cavity (202) and an end of one of the radial profiles (32b), such that the rotation of the shaft (20) in one direction of rotation winds the cable (122a) on said radial profile (32b), driving the displacement of the finger (12) by pulling the cable (122b).

4. The hand as claimed in claim 3, in which said radial profile (32b) is substantially circular over a portion of circumference close to a semicircle centered on the axis (X) of rotation of the shaft (20), and on which the cable (122a) of one of the several fingers (12) can be wound; the diameter of the radial profile determining the travel of the cable (122a) and the amplitude of the displacement of the finger (12) between the position of rest and the compressed position.

5. The hand as claimed in one of claims 3 or 4, in which the link part (22) of one of the several fingers (12) comprises a crimping (122b) mounted to rotate freely in the cavity (202) centered on the axis (X) of rotation of the shaft (20); the duct (202a) being configured to allow the cable (122a) to pass through the shaft (20) radially all along a the radial profile (32a), such that the finger (12) is maintained in the position of rest upon the rotation of the shaft (20).

6. The hand as claimed in one of claims 3 to 5, in which the shaft (20) has several first and second radial profiles (32a, 32b, 34a, 34b) arranged in succession according to the axis (X) of rotation of the shaft (20), for the simultaneous displacement of several fingers (12, 14).

7. The hand as claimed in one of claims 3 to 6, comprising two identical fingers (13, 14) linked to the shaft by two cables of identical lengths and two identical crimpings; the shaft (20) comprising two housing cavities (203, 204) formed in the shaft (20) at two distinct distances (d) from the axis (X) of rotation of the shaft (20), making possible to locate the two fingers (13, 14) in the palm (15) of the hand (4) at two distinct distances from the axis (X) of rotation of the shaft (20).

8. The hand as claimed in claim 1 or 2, in which the link part of one of the several fingers is rigid and in which the shaft comprises a first and a second cams; the rigid link part being displaced respectively by means of the first and second cams by rotation of the shaft respectively in the first direction and in the opposite direction.

9. A humanoid robot equipped with a hand (4) as claimed in any one of the preceding claims.
